# EUROPEAN PATENT APPLICATION

(11) **EP 0 984 579 A1**
(43) Date of publication of application: **08.03.2000**
(21) Application number: 99909346.1
(22) Date of filing: 29.03.1999
(51) Int. Cl.: H04J 13/00

(54) **TRANSMITTING/RECEIVING DEVICE AND TRANSMITTING/RECEIVING METHOD**

(30) Priority: 31.03.1998 JP 10574598
(71) Applicant: MATSUSHITA ELECTRIC INDUSTRIAL CO., LTD., Kadoma-shi, Osaka 571-8501 (JP)
(72) Inventor: UESUGI, Mitsuru, Yokosuka-shi Kanagawa 238-0048 (JP)
(74) Representative: Grünecker, Kinkeldey, Stockmair & Schwanhäusser Anwaltssozietät
(86) International application number: JP9901588
(87) International publication number: WO9950987

(57) **Abstract**

In the present invention, when multi-code transmission is performed, transmission side executes conversion of amplitude to suppress the peak power, and a reception side has an estimator for compensating a distortion due to the conversion. In particular, as one of the methods, the transmission side executes MOD calculation for each chip, and the reception side executes estimation for an amplitude lost by the MOD calculation, thereby reducing the peak power to one-ninth. In the estimation for the amplitude lost by the MOD calculation, it is determined that the value of the odd number times or even number times that of a MOD denominator has more likelihood between all used codes.

## Description

### Technical Field

The present invention relates to a transmission/reception apparatus and transmission/reception method, in particular, transmission/reception apparatus and transmission/reception method for performing a multi-carrier transmission in a CDMA (Code Division Multiple Access) communication.

### Background Art

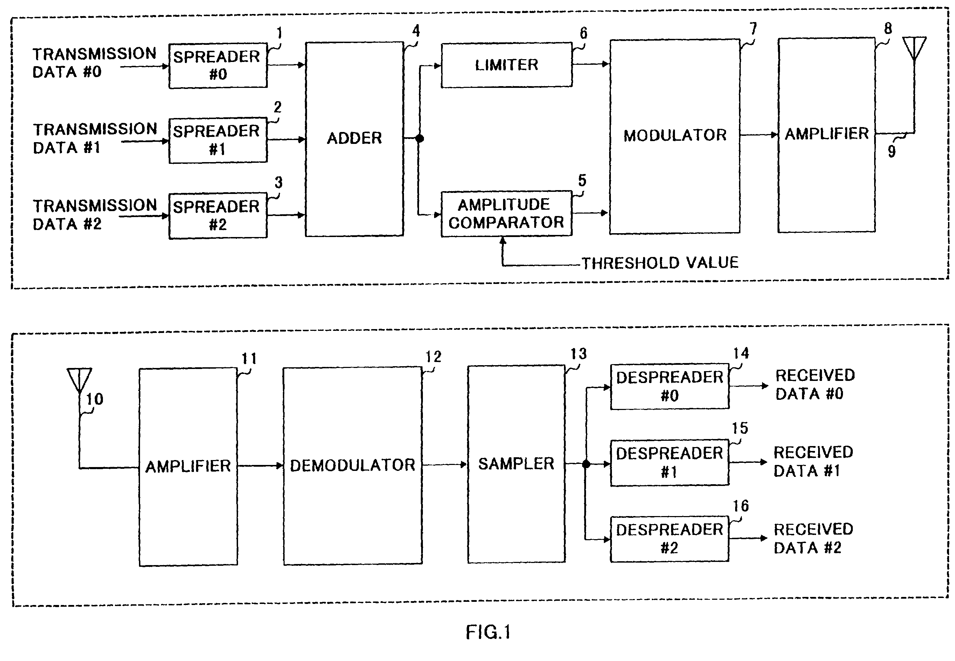

FIG.1 is a block diagram illustrating a configuration of a conventional transmission/reception apparatus. This example illustrates the case where 3 codes are multiplexed. Transmission data #0, #1 and #2 are respectively spread with different spreading codes at spreaders 1 to 3. These codes are assumed to be orthogonalized to each other. The spread data are added at adder 4.

At this point, a great peak appears depending on a pattern of the transmission data. For example, a signal of maximum ±3 is present in the case where 3 codes are multiplexed. In order to suppress such a signal, limiter 6 limits an amplitude. Amplitude comparator 5 compares a threshold value with an absolute value of an output from adder 4. When the threshold value is smaller, limiter 6 limits the amplitude. Herein, the threshold value is a predetermined amplitude for use in limitation. Further, the threshold value is determined to a small value as possible within a range where received qualities do not deteriorate remarkably. For example, in the case where the threshold value is 2, when the output from adder 4 is 3, limiter 6 changes the output to 2, and when the output from adder 4 is -3, limiter changes the output to -2. In the other cases, i.e., (within ±1), the outputs are not changed.

Modulator 7 modulates the resultant, and further amplifier 8 amplifies the modulated signal to transmit from transmission antenna 9. Thus, the amplitude is made smaller, thereby reducing the load of amplifier 8.

A reception side performs normal CDMA reception. In other words, a signal received at reception antenna 10 is amplified at amplifier 11, demodulated at demodulator 12, and then sampled at sampler 13. The sampled result is despread at despreaders 14 to 16 with the same codes as used in the spreading at a transmission side, thereby being separated to three signals to obtain received data #0, #1 and #2. In the case where a delayed wave is present, the RAKE receiving is thereafter performed to further improve the performance.

Since a distortion component is suppressed by the despreading, the use of limiter 6 at the transmission side does not affect on a received quality largely. In the case of this method, as the number of multiplexed codes is increased, since the ratio of the peak power and the average power is increased, the effect of limiter 6 is further increased.

In the above-described conventional communication system, although the distortion caused by the limiter is suppressed to some degree by the despreading, it is not possible to lower the threshold value so much, because the reception side does not have an adequate compensation capability. On the other hand, it is desired that an amplitude (peak power) be suppressed to a small value as possible at a transmission side, to lower the load of an amplifier as small as possible.

### Disclosure of Invention

An object of the present invention is provide to a transmission/reception apparatus and transmission/reception method capable of lowering a peak power at a transmission side to reduce the load of an amplifier, and providing a reception side with an adequate compensation capability thereof.

To achieve the above object, in the transmission/reception apparatus of the present invention, the transmission side converts the amplitude to suppress the peak power in performing multi-code transmission, and the reception side has an estimator which compensates the distortion caused thereby.

### Brief Description of Drawings

FIG.1 is a block diagram illustrating a configuration of a conventional transmission/reception apparatus;
FIG.2 is a block diagram illustrating a configuration of a transmission/reception apparatus according to a first embodiment of the present invention;
FIG.3 is a block diagram illustrating a configuration of a transmission/reception apparatus according to a second embodiment of the present invention;
FIG.4 is a block diagram illustrating a configuration of a transmission/reception apparatus according to a third embodiment of the present invention;
FIG.5 is a block diagram illustrating a configuration of a transmission/reception apparatus according to a fourth embodiment of the present invention;
FIG.6 is a diagram illustrating a result of MOD calculation;
FIG.7 is a block diagram illustrating a configuration of a transmission/reception apparatus according to a fifth embodiment of the present invention;
FIG.8 is a block diagram illustrating a configuration of a transmission/reception apparatus according to a sixth embodiment of the present invention;
FIG.9 is a block diagram illustrating a configuration of a transmission/reception apparatus according to a seventh embodiment of the present invention; and
FIG.10 is a block diagram illustrating a configuration of a transmission/reception apparatus according to an eighth embodiment of the present invention.

### Best Mode for Carrying Out the Invention

Embodiments of the present invention are explained below with reference to attached drawings.

### (First embodiment)

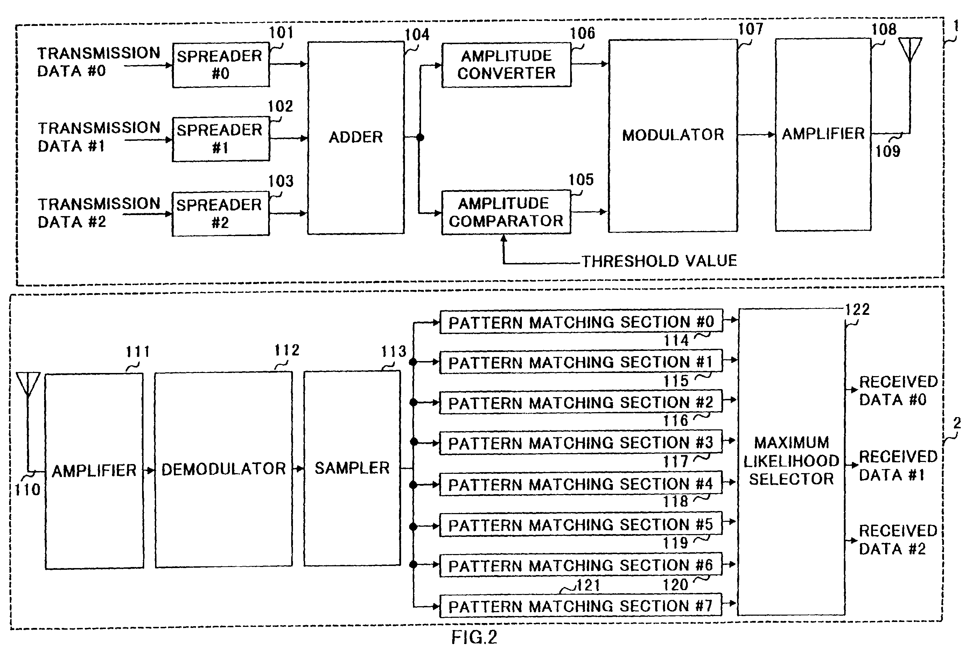

FIG.2 is a block diagram illustrating a configuration of a transmission/reception apparatus according to the first embodiment. In FIG.2, the transmission/reception apparatus is provided with transmission section 100 and reception section 200. Transmission section 100 is provided with spreaders 101 to 103 each of which spreads transmission data, adder 104 which adds spread data, amplitude comparator 105 which compares a threshold value with an amplitude of data, amplitude converter 106 which converts the amplitude based on the result at amplitude comparator 105, modulator 107 which modulates the data, amplifier 108 which amplifies the signal, and antenna 109 which transmits the signal.

Reception section 200 is provided with antenna 110 which receives data, amplifier 111 which amplifies the data, demodulator 112 which demodulates the data, sampler 113 which samples the data, pattern matching sections 114 to 121 which performs pattern matching of chips subjected to amplitude conversion, and maximum likelihood selector 122 which selects the pattern with the maximum likelihood among from the patterns subjected to the pattern matching.

This example illustrates the case where 3 codes are multiplexed. Transmission data #0, #1 and #2 are spread respectively with different spreading codes at spreaders 101 to 103. These codes are assumed to be orthogonalized to each other. The spread data are provided to adder 104 to be added. At this point, a great peak appears depending on a pattern of the transmission data. For example, a signal of maximum ±3 is present in the case where 3 codes are multiplexed. In order to suppress such a signal, amplitude converter 106 converts an amplitude.

Amplitude comparator 105 compares an absolute value of an output from adder 104 with a predetermined threshold value. When the absolute value of the output from adder 104 exceeds the threshold value, amplitude converter 106 executes the amplitude conversion. In addition, the threshold value is set at an amplitude for use in limitation. Further, the threshold value is determined to a small value as possible within a range where received qualities do not deteriorate remarkably. The method of amplitude conversion is not limited in particular, but it is necessary that the amplitude conversion be executed one by one for the output from adder 104. Alternately, the amplitude conversion may be executed without comparing amplitudes.

Modulator 107 modulates the resultant to output to amplifier 108. Amplifier 108 amplifies the signal to be transmitted from transmission antenna 109. Thus, the amplitude (peak power) is limited, thereby making it possible to reduce the load of amplifier 108.

A signal received at reception antenna 110 is amplified at amplifier 111, demodulated at demodulator 112, and then sampled at sampler 113. The sampled result is subjected to the pattern matching at pattern matching sections 114 to 121. In this example, since the transmission is performed using 3 codes each having 1 bit per 1 symbol, the number of all available patterns is 8. Therefore, 8 pattern matching sections are prepared.

Pattern matching sections 114 to 121 each performs the matching of the received signal with all patterns, considered to be possible as outputs from amplitude converter 106, over 1 symbol, to calculate the likelihood. The likelihood is calculated by integrating an Euclid distance between the received signal and the pattern considered to be possible, i.e., the square of a difference therebetween. The result is provided to likelihood selector 122. Likelihood selector 122 compares the provided patterns to each other to select the pattern with the maximum likelihood. Thus, received data #0, #1 and # 2 are obtained.

In the case where a delayed wave is present, it may be possible to perform the pattern matching including the delayed wave by providing information on the delayed wave to pattern matching sections 114 to 121. Further, it may be possible to execute RAKE combining of the outputs from pattern matching sections 114 to 121 by considering such sections as despreading filters.

According to the above configuration, it is possible to limit an amplitude largely with respect to a chip with a large peak power, thereby making it possible to lower the load of an amplifier as small as possible. In this case, since the reception side subjects the chip with limited amplitude to power compensation, it is possible to prevent the received quality from being affected. In particular, since the pattern with the maximum likelihood is selected from among all code patterns for chips subjected to amplitude conversion, it is possible to assuredly compensate the chips subjected to the converted amplitude.

In this method, as the number of multiplexed codes is increased, since the ratio of the peak power and the average power is increased, the effects are further increased. Since it is possible to estimate the distortion caused by the suppression of the peak power at the transmission side when transmission data patterns are known, the larger distortion is acceptable as compared to the case where the distortion is suppressed simply by despreading. Therefore, it is possible to lower the threshold value than in the conventional case, thereby resulting in further advantages in miniaturization, low power consumption and cost reduction.

### (Second embodiment)

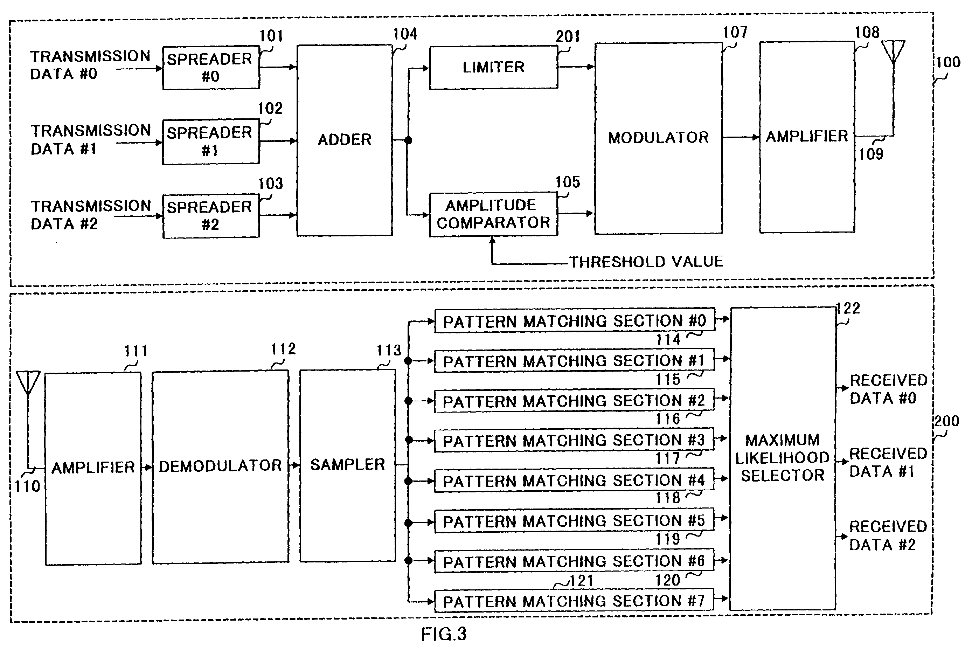

FIG.3 is a block diagram illustrating a configuration of a transmission/reception apparatus according to the second embodiment. In FIG.3, the same sections as in FIG.2 have the same symbols as in FIG.2 to omit the explanation thereof. In the transmission/reception apparatus illustrated in FIG.3, limiter 201 is used as an amplitude converter in transmission section 100. This example illustrates the case where 3 codes are multiplexed.

Transmission data #0, #1 and #2 are spread respectively with different spreading codes at spreaders 101 to 103. These codes are assumed to be orthogonalized to each other. The spread data are provided to adder 104 to be added. At this point, a great peak appears depending on a pattern of the transmission data. For example, a signal of maximum ±3 is present in the case where 3 codes are multiplexed. In order to suppress such a signal, limiter 201 converter 106 converts an amplitude.

Amplitude comparator 105 compares an absolute value of an output from adder 104 with a predetermined threshold value. When the threshold value is smaller than that value, limiter 201 executes the amplitude conversion. In addition, the threshold value is set at an amplitude for use in limitation. Further, the threshold value is determined to a small value as possible within a range where received qualities do not deteriorate remarkably.

Modulator 107 modulates the resultant to output to amplifier 108. Amplifier 108 amplifies the signal to be transmitted from transmission antenna 109. Thus, the amplitude (peak power) is limited, thereby making it possible to reduce the load of amplifier 108.

A signal received at reception antenna 110 is amplified at amplifier 111, demodulated at demodulator 112, and then sampled at sampler 113. The sampled result is subjected to the pattern matching at pattern matching sections 114 to 121. In this example, since the transmission is performed using 3 codes each having 1 bit per 1 symbol, the number of all available patterns is 8. Therefore, 8 pattern matching sections are prepared.

Pattern matching sections 114 to 121 each performs the matching of the received signal with all patterns, considered to be possible as outputs from amplitude converter 106, over 1 symbol, to calculate the likelihood. The resultant is provided to likelihood selector 122 to be compared, and thereby the pattern with the maximum likelihood is selected. Thus, received data #0, #1 and # 2 are obtained.

In the case where a delayed wave is present, it may be possible to perform the pattern matching including the delayed wave by providing information on the delayed wave to pattern matching sections 114 to 121. Further, it may be possible to execute RAKE combining of the outputs from pattern matching sections 114 to 121 by considering such sections as despreading filters.

In this method, as the number of multiplexed codes is increased, since the ratio of the peak power and the average power is increased, the effects are further increased. Since it is possible to estimate the distortion caused by the suppression of the peak power at the transmission side, the larger distortion is acceptable as compared to the case where the distortion is suppressed simply by despreading. Therefore, it is possible to lower the threshold value than in the conventional case, thereby resulting in further advantages in miniaturization, low power consumption and cost reduction.

In this embodiment, limiter 201 is used as an amplitude converter. The use of limiter is the simplest method for the amplitude limitation, and provides almost no excessive load to the transmission side. Further, since an output from limiter 201 corresponds to the transmission data pattern completely one by one, it is possible for pattern matching sections 114 to 121 to completely identify such an output.

### (Third embodiment)

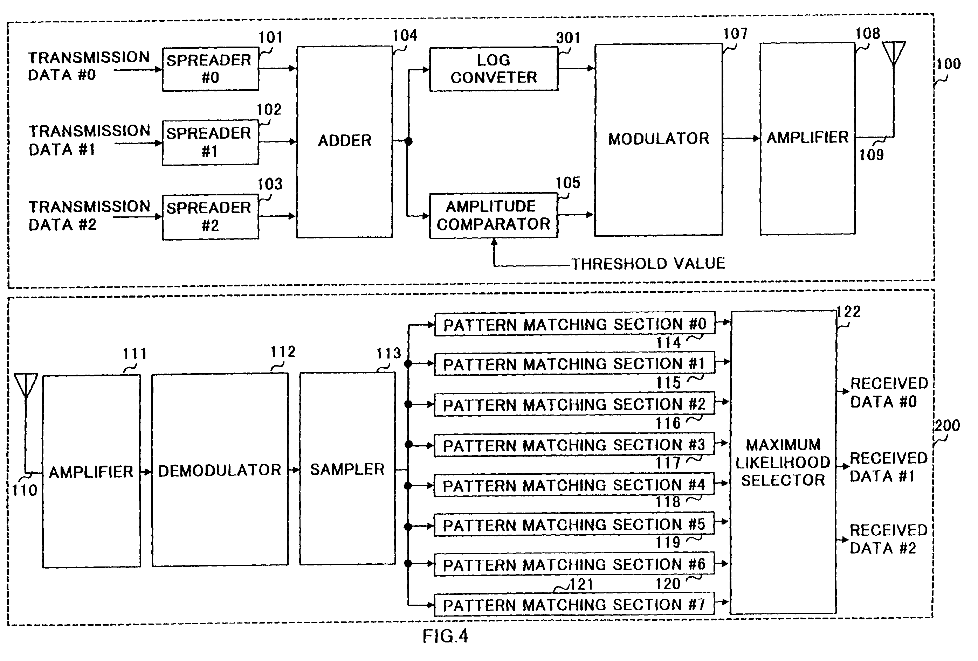

FIG.4 is a block diagram illustrating a configuration of a transmission/reception apparatus according to the third embodiment. In FIG.4, the same sections as in FIG.2 have the same symbols as in FIG.2 to omit the explanation thereof. In the transmission/reception apparatus illustrated in FIG.4, LOG converter 302 is used as an amplitude converter in transmission section 100. This example illustrates the case where 3 codes are multiplexed.

Transmission data #0, #1 and #2 are spread respectively with different spreading codes in spreaders 101 to 103. These codes are assumed to be orthogonalized to each other. The spread data are provided to adder 104 to be added. At this point, a great peak appears depending on a pattern of the transmission data. For example, a signal of maximum 3 is present in the case where 3 codes are multiplexed. In order to suppress such a signal, LOG converter 301 subjects an amplitude to conversion to logarithm.

Amplitude comparator 105 compares an absolute value of an output from adder 104 with a predetermined threshold value. When the threshold value is smaller than that value, LOG converter 301 subjects the amplitude to the conversion to logarithm. In addition, the threshold value is set at an amplitude for use in limitation. Further, the threshold value is determined to a small value as possible within a range where received qualities do not deteriorate remarkably. The large amplitude thus becomes a compressed amplitude by the LOG converter.

Modulator 107 modulates the resultant to output to amplifier 108. Amplifier 108 amplifies the signal to be transmitted from transmission antenna 109. Thus, the amplitude (peak power) is limited, thereby making it possible to reduce the load of amplifier 108.

A signal received at reception antenna 110 is amplified at amplifier 111, demodulated at demodulator 112, and then sampled at sampler 113. The sampled result is subjected to the pattern matching at pattern matching sections 114 to 121. In this example, since the transmission is performed using 3 codes each having 1 bit per 1 symbol, the number of all available patterns is 8. Therefore, 8 pattern matching sections are prepared.

Pattern matching sections 114 to 121 each performs the matching of the received signal with all patterns. considered to be possible as outputs from amplitude converter 106, over 1 symbol, to calculate the likelihood. The result is provided to likelihood selector 122 to be compared, and thereby the pattern with the maximum likelihood is selected. Thus, received data #0, #1 and # 2 are obtained.

In the case where a delayed wave is present, it may be possible to perform the pattern matching including the delayed wave by providing information on the delayed wave to pattern matching sections 114 to 121. Further, it may be possible to execute RAKE combining of the outputs from pattern matching sections 114 to 121 by considering such sections as despreading filters.

In this method, as the number of multiplexed codes is increased, since the ratio of the peak power and the average power is increased, the effects are further increased. Since it is possible to estimate the distortion caused by the suppression of the peak power at the transmission side, the larger distortion is acceptable as compared to the case where the distortion is suppressed simply by despreading. Therefore, it is possible to lower the threshold value than in the conventional case, thereby resulting in further advantages in miniaturization, low power consumption and cost reduction.

In this embodiment, LOG converter 301 is used as an amplitude converter. LOG converter 301 is achieved easily, for example, by preparing, for example, a table in a memory, providing almost no excessive load to the transmission side. Further, since an output from LOG converter 301 corresponds to the transmission data pattern completely one by one, it is possible for pattern matching sections 114 to 121 to completely identify such an output.

In the third embodiment in the case of a large amplitude, the performance is improved due to remained information, but the peak power is increased, as compared to the second embodiment. In the case of the same peak power, it is considered that the superiority or inferiority varies depending on conditions, either of the embodiments may be used depending on such conditions.

### (Fourth embodiment)

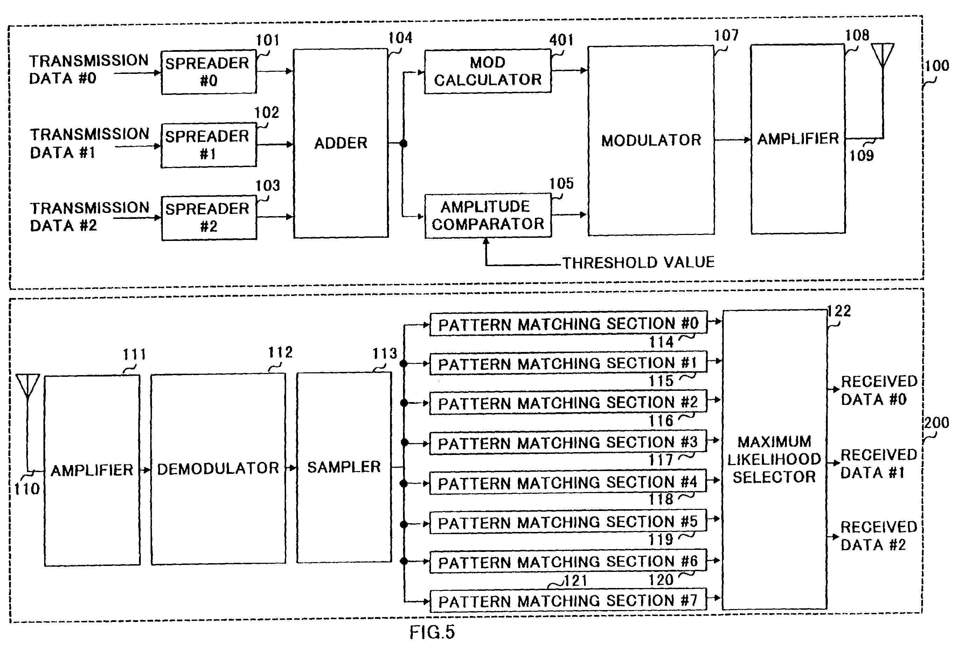

FIG.5 is a block diagram illustrating a configuration of a transmission/reception apparatus according to the fourth embodiment. In FIG.5, the same sections as in FIG.2 have the same symbols as in FIG.2 to omit the explanation thereof. In the transmission/reception apparatus illustrated in FIG.5, MOD calculator 401 is used as an amplitude converter in transmission section 100. This example illustrates the case where 3 codes are multiplexed.

Transmission data #0, #1 and #2 are spread respectively with different spreading codes in spreaders 101 to 103. These codes are assumed to be orthogonalized to each other. The spread data are provided to adder 104 to be added. At this point, a great peak appears depending on a pattern of the transmission data. For example, a signal of maximum ±3 is present in the case where 3 codes are multiplexed. In order to suppress such a signal, MOD calculator 401 converts an amplitude.

Amplitude comparator 105 compares an absolute value of an output from adder 104 with a predetermined threshold value. When the threshold value is smaller than that value, MOD calculator 401 executes the amplitude conversion. In addition, the threshold value is set at an amplitude for use in limitation. Further, the threshold value is determined to a small value as possible within a range where received qualities do not deteriorate remarkably.

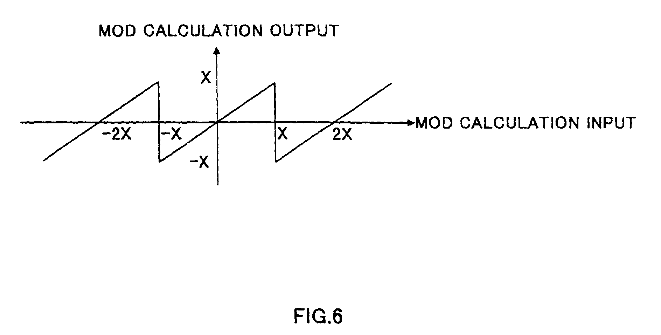

In the MOD calculation, it is assumed that the denominator is X. When the denominator exceeds X, -2X is substituted for the denominator. When the denominator smaller than X, +2X is substituted for the denominator. FIG.6 illustrates the MOD calculation. After the above processing, when the denominator still exceeds X, -2X is substituted again into the denominator, and when the denominator is smaller than X, +2X is substituted again into the denominator. The threshold value in FIG.5 corresponds to the value of X. According to the above processing, any values which are finite values are converted into values between ±X.

Modulator 107 modulates the resultant to output to amplifier 108. Amplifier 108 amplifies the signal to be transmitted from transmission antenna 109. Thus, the amplitude (peak power) is limited, thereby making it possible to reduce the load of amplifier 108.

A signal received at reception antenna 110 is amplified at amplifier 111, demodulated at demodulator 112, and then sampled at sampler 113. The sampled result is subjected to the pattern matching at pattern matching sections 114 to 121. In this example, since the transmission is performed using 3 codes each having 1 bit per 1 symbol, the number of all available patterns is 8. Therefore, 8 pattern matching sections are prepared.

Pattern matching sections 114 to 121 each performs the matching of the received signal with all patterns, considered to be possible as outputs from amplitude converter 106, over 1 symbol, to calculate the likelihood. The resultant is provided to likelihood selector 122 to be compared, and thereby the pattern with the maximum likelihood is selected. Thus, received data #0, #1 and # 2 are obtained.

In the case where a delayed wave is present, it may be possible to perform the pattern matching including the delayed wave by providing information on the delayed wave to pattern matching sections 114 to 121. Further, it may be possible to execute RAKE combining of the outputs from pattern matching sections 114 to 121 by considering such sections as despreading filters.

In this method, as the number of multiplexed codes is increased, since the ratio of the peak power and the average power is increased, the effects are further increased. Since it is possible to estimate the distortion caused by the suppression of the peak power at the transmission side, the larger distortion is acceptable as compared to the case where the distortion is suppressed simply by despreading. Therefore, it is possible to lower the threshold value than that in the conventional case, thereby resulting in further advantages in miniaturization, low power consumption and cost reduction.

In this embodiment, MOD calculator 401 is used as an amplitude converter. MOD calculator 401 is achieved easily by being provided with a comparator, resulting in almost no excessive load at the transmission side. Further, since an output from MOD calculator 401 corresponds to the transmission data pattern completely one by one, it is possible for pattern matching sections 114 to 121 to completely identify such an output.

The transmission/reception apparatus in the fourth embodiment can obtain information on signals with value exceeding the threshold value, specifically, about how much the value is higher than the threshold value. Such information is considered to provide the apparatus in the fourth embodiment with higher performance than that of the apparatus in the second embodiment.

### (Fifth embodiment)

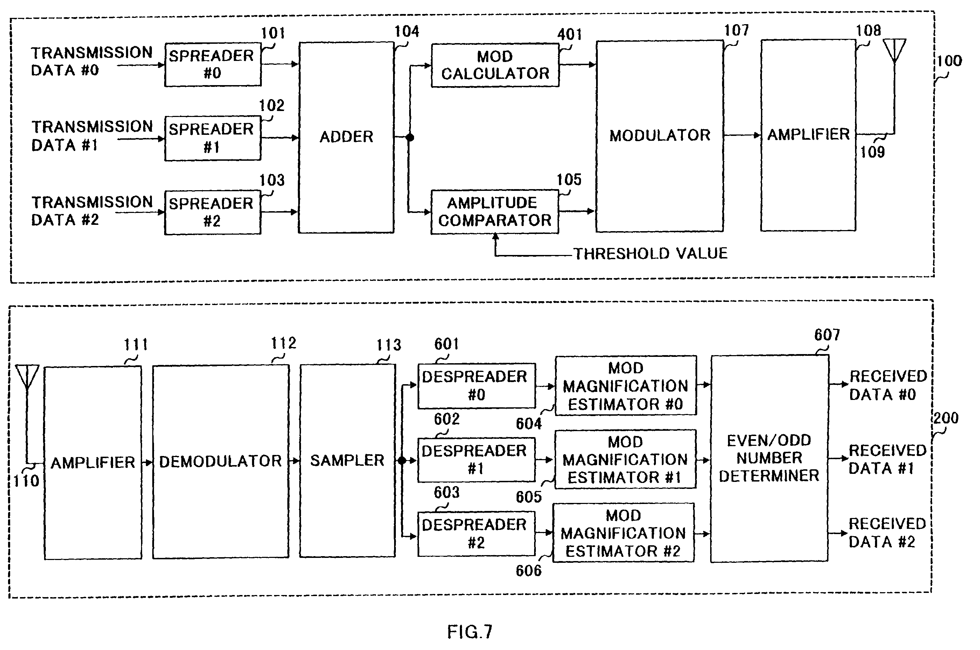

FIG.7 is a block diagram illustrating a configuration of a transmission/reception apparatus according to the fifth embodiment. In FIG. 7, the same sections as in FIG.5 have the same symbols as in FIG.5 to omit the explanation thereof. Reception section 200 of the transmission/reception apparatus illustrated in FIG.7 is provided with antenna 110 which receives a signal, amplifier 111 which amplifies the signal, demodulator 112 which demodulates the signal, sampler 113 which samples the data, despreaders 601 to 603 each of which despreads the sampled data, MOD magnification estimators 604 to 606 each of which estimates how many times the MOD calculation is performed, and even/odd number determiner 607 which determines whether the number of MOD calculation times is an even number or an odd number based on the result in MOD magnification estimators 604 to 606. This example illustrates the case where 3 codes are multiplexed.

Transmission data #0, #1 and #2 are spread respectively with different spreading codes in spreaders 101 to 103. These codes are assumed to be orthogonalized to each other. The spread data are provided to adder 104 to be added. At this point, a great peak appears depending on a pattern of the transmission data. For example, a signal of maximum ±3 is present in the case where 3 codes are multiplexed. In order to suppress such a signal. MOD calculator 401 converts an amplitude.

Amplitude comparator 105 compares an absolute value of an output from adder 104 with a predetermined threshold value. When the threshold value is smaller than that value, MOD calculator 401 executes the amplitude conversion. In addition, the threshold value is set at an amplitude for use in limitation. Further, the threshold value is determined to a small value as possible within a range where received qualities do not deteriorate remarkably.

In the MOD calculation, it is assumed that the denominator is X. When the denominator exceeds X, -2X is substituted for the denominator. When the denominator smaller than X, +2X is substituted for the denominator. FIG.6 illustrates the MOD calculation. After the above processing, when the denominator still exceeds X, -2X is substituted again into the denominator, and when the denominator is smaller than X, +2X is substituted again into the denominator. The threshold value in FIG.7 corresponds to the value of X. According to the above processing, any values which are finite values are converted into values between ±X.

Modulator 107 modulates the resultant to output to amplifier 108. Amplifier 108 amplifies the signal to be transmitted from transmission antenna 109. Thus, the amplitude (peak power) is limited, thereby making it possible to reduce the load of amplifier 108.

A signal received at reception antenna 110 is amplified at amplifier 111, demodulated at demodulator 112, and then sampled at sampler 113. The sampled result is separated into 3 signals by being despread at despreaders 601 to 603, and then respectively provided to MOD magnification estimators 604 to 606 to be subjected to the estimation on information which is lost by MOD.

For example, when it is assumed that the number of used codes is 12, and the threshold value is 4, the amplitude of a chip, of which the real amplitude is 10, is 2 (10-4×2=2). It is further assumed that the value of Y is two times that of the threshold (2X). When the amplitude conversion, which MOD calculator 401 executes when a value exceeds the threshold value, is executed once, outputs from despreaders 601 to 603 each have an error with an absolute value of Y. Generally, when the number of amplitude conversion times by the MOD calculation is N, with respect to the outputs from despreaders 601 to 603, the error of ±NY is generated. Further, when N is the even number, the value of the error is the even number times that of Y, and when N is an odd number, the value of the error is the odd number times that of Y. Using the aforementioned property, MOD magnification estimators 604 to 606 obtain a value of the integer times the value of Y, which has the maximum likelihood, for each code. With respect to a code with erroneous N determination, ±1 is further added to the obtained magnification, and two magnifications are compared to obtain more likelihood and determine the magnification with the second likelihood.

Even/odd number determiner 607 estimates whether each of the values of N of all codes is the even number or the odd number based on outputs from MOD magnification estimators 604 to 606. In the case where the estimated result is the even number, with respect to the code determined as having the even number, MOD magnification estimators 604 to 606 execute the compensation of the received signal using the determination, and with respect to the code determined as having the odd number, MOD magnification estimators 604 to 606 execute the compensation of the received signal using the determination result with the second likelihood. Thus, received data #0, #1 and #2 are obtained. On the contrary, in the case where the estimated result is the odd number, with respect to the code determined as having the odd number, MOD magnification estimators 604 to 606 execute the compensation of the received signal using the determination, and with respect to the code determined as having the even number. MOD magnification estimators 604 to 606 execute the compensation of the received signal using the determination result with the second likelihood. Thus, received data #0, #1 and #2 are obtained.

In the case where a delayed wave is present, it may be possible to execute RAKE combining of the outputs from despreaders 601 to 603. In this method, as the number of multiplexed codes is increased, since the ratio of the peak power and the average power is increased, the effects are further increased. Since the distortion caused by the suppression of the peak power at the transmission side is the integer times the value of Y in the outputs from despreaders 601 to 603, it is possible to estimate such a distortion with high accuracy to some degree. Further, since estimated results of a plurality of codes can be used, it is possible to estimate the codes when the pattern of transmission data are known as the number of codes is increased. Accordingly, the larger distortion is acceptable as compared to the case where the distortion is suppressed simply by despreading. Therefore, it is possible to lower the threshold value than that in the conventional case, thereby resulting in further advantages in miniaturization, low power consumption and cost reduction.

In this embodiment, MOD calculator 401 is used as an amplitude converter. MOD calculator 401 is achieved easily by being provided with a comparator, resulting in almost no excessive load at the transmission side. Further, since an output from MOD calculator 401 corresponds to the transmission data pattern completely one by one, it is possible to reproduce completely.

In addition, in this embodiment, since the number of executed MOD calculations can be obtained for each code, it is possible to obtain how much degree a value exceeds the threshold value, and based on the degrees, to obtain how much degree the compensation should be executed. It is thereby possible to compensate the amplitude conversion, which is executed at the transmission side, at the reception side assuredly. Further, in this case, since the degree of the compensation is obtained, it is possible to execute the reception processing with a small amount of calculations. Accordingly, it is possible to reduce the load of processing at the reception side. Thus, the transmission/reception apparatus according to the fifth embodiment has a reception side with a smaller scale than that in the transmission/reception apparatuses according to the first to fourth embodiments.

### (Sixth embodiment)

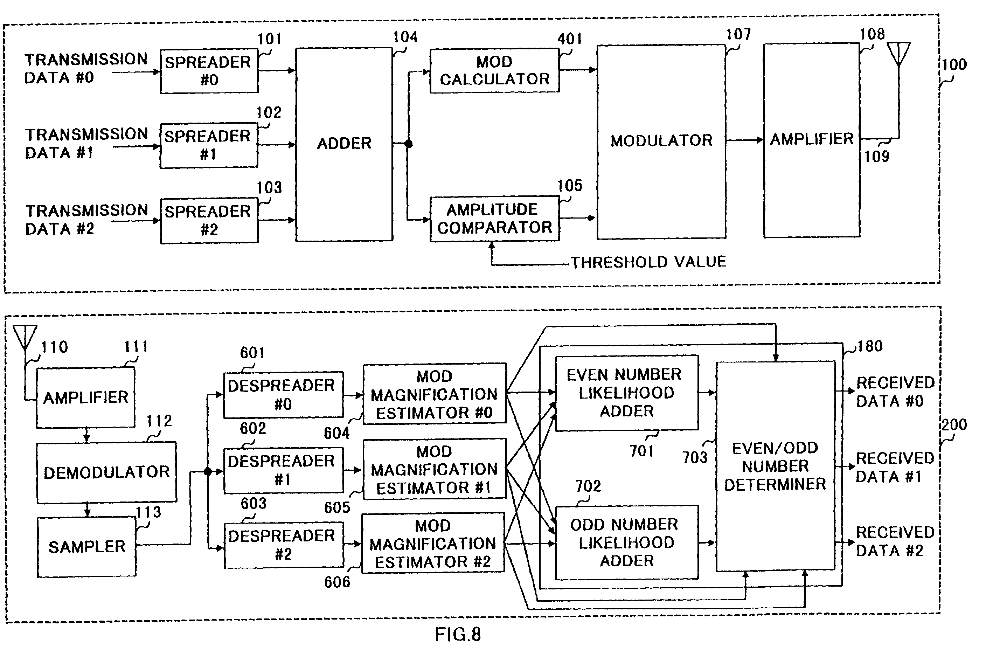

FIG.8 is a block diagram illustrating a configuration of a transmission/reception apparatus according to the sixth embodiment, In FIG.8, the same sections as in FIG.7 have the same symbols as in FIG.7 to omit the explanation thereof. In reception section 200 of the transmission/reception apparatus illustrated in FIG.8. even/odd number determiner 607 is composed of even number likelihood adder 701, odd number likelihood adder 702, and even/odd number modifier 703. This example illustrates the case where 3 codes are multiplexed.

Transmission data #0, #1 and #2 are spread respectively with different spreading codes in spreaders 101 to 103. These codes are assumed to be orthogonalized to each other. The spread data are provided to adder 104 to be added. At this point, a great peak appears depending on a pattern of the transmission data. For example, a signal of maximum ±3 is present in the case where 3 codes are multiplexed. In order to suppress such a signal, MOD calculator 401 limits an amplitude.

Amplitude comparator 105 compares an absolute value of an output from adder 104 with a predetermined threshold value. When the threshold value is smaller than that value, MOD calculator 401 executes the amplitude limitation. In addition, the threshold value is set at an amplitude for use in limitation. Further, the threshold value is determined to a small value as possible within a range where received qualities do not deteriorate remarkably.

In the MOD calculation, it is assumed that the denominator is X. When the denominator exceeds X. -2X is substituted for the denominator. When the denominator smaller than X, +2X is substituted for the denominator. FIG.6 illustrates the MOD calculation. After the above processing, when the denominator still exceeds X, -2X is substituted again for the denominator, and when the denominator is smaller than X, +2X is substituted again for the denominator. The threshold value in FIG.8 corresponds to the value of X. According to the above processing, any values which are finite values are converted into values between ±X.

Modulator 107 modulates the resultant to output to amplifier 108. Amplifier 108 amplifies the signal to be transmitted from transmission antenna 109. Thus, the amplitude (peak power) is limited, thereby making it possible to reduce the load of amplifier 108.

A signal received at reception antenna 110 is amplified at amplifier 111, demodulated at demodulator 112, and then sampled at sampler 113. The sampled result is separated into 3 signals by being despread at despreaders 601 to 603, and then respectively provided to MOD magnification estimators 604 to 606 to be subjected to the estimation on information which is lost by MOD.

For example, when it is assumed that the number of used codes is 12, and the threshold value is 4, the amplitude of a chip, of which the real amplitude is 10, is 2 (10-4×2=2). It is further assumed that the value of Y is two times that of the threshold (2X). When the amplitude conversion, which MOD calculator 401 executes when a value exceeds the threshold value, is executed once, outputs from despreaders 601 to 603 each have an error with an absolute value of Y. Generally, when the number of amplitude conversion times by the MOD calculation is N, with respect to the outputs from despreaders 601 to 603, the error of ±NY is generated. Further, when N is the even number, the value of error is the even number times that of Y, and when N is an odd number, the value of the error is the odd number times that of Y. Using the aforementioned property, MOD magnification estimators 604 to 606 obtain a value of the integer times the value of Y, which has the maximum likelihood, for each code. With respect to a code with erroneous N determination, ±1 is further added to the obtained magnification, and two magnifications are compared to obtain more likelihood and determine the magnification with the second likelihood.

In the even/odd number determination, likelihood is used for each estimation in estimating each of the values of N of all codes is an even number or an odd number based on outputs from MOD magnification estimators 604 to 606. Used as the likelihood is, for example, a value in inverse proportion to a difference between a desired amplitude and the output from each of despreaders 604 to 606 to which an estimated correction value is added.

In the case where the estimated result is the even number in MOD magnification estimators 604 to 606, even number likelihood adder 701 adds the likelihood, and in the case where the estimated result is the odd number, odd number likelihood estimator 702 adds the likelihood. Even/odd number modifier 703 estimates a larger added result as correct. In the case where the estimated result is the even number, with respect to the code determined as having the even number, MOD magnification estimators 604 to 606 execute the compensation of the received signal using the determination, and with respect to the code determined as having the odd number, MOD magnification estimators 604 to 606 execute the compensation of the received signal using the determination result with the second likelihood. Thus, received data #0, #1 and #2 are obtained. On the contrary, in the case where the estimated result is the odd number, with respect to the code determined as having the odd number, MOD magnification estimators 604 to 606 execute the compensation of the received signal using the determination, and with respect to the code determined as having the even number, MOD magnification estimators 604 to 606 execute the compensation of the received signal using the determination result with the second likelihood. Thus, received data #0, #1 and #2 are obtained. As described above, by use of the likelihood in the even/odd determination, it is possible to execute the even/odd determination with high accuracy.

In the case where a delayed wave is present, it may be possible to execute RAKE combining of the outputs from despreaders 601 to 603. In this method, as the number of multiplexed codes is increased, since the ratio of the peak power and the average power is increased, the effects are further increased. Since the distortion caused by the suppression of the peak power at the transmission side is the integer times the value of Y in the outputs from despreaders 601 to 603, it is possible to estimate such a distortion with high accuracy to some degree. Further, since estimated results of a plurality of codes can be used, it is possible to estimate the codes when the pattern of transmission data are known as the number of codes is increased. Accordingly, the larger distortion is acceptable as compared to the case where the distortion is suppressed simply by despreading. Therefore, it is possible to lower the threshold value than that in the conventional case, thereby resulting in further advantages in miniaturization, power consumption and cost reduction.

In this embodiment, MOD calculator 401 is used as an amplitude converter. MOD calculator 401 is achieved easily by being provided with a comparator, resulting in almost no excessive load at the transmission side. Further, since an output from MOD calculator 401 corresponds to the transmission data pattern completely one by one, it is possible to reproduce completely. Furthermore, the transmission/reception apparatus according to the sixth embodiment has a reception side with a smaller scale than that in the transmission/reception apparatuses according to the first to fourth embodiments as well as the transmission/reception apparatus according to fifth embodiment.

### (Seventh embodiment)

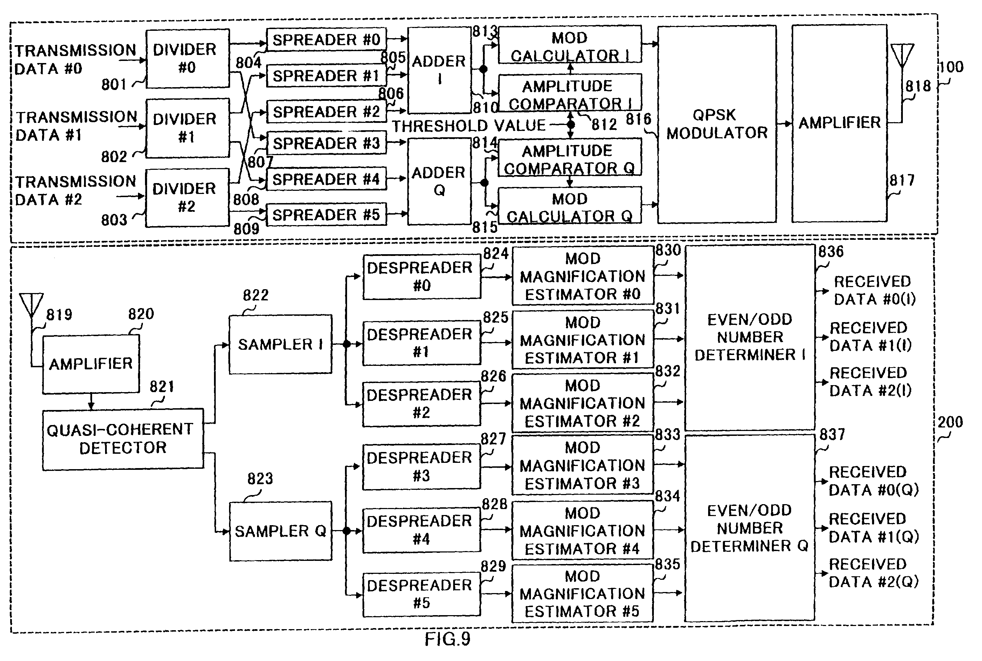

FIG.9 is a block diagram illustrating a configuration of a transmission/reception apparatus according to the seventh embodiment. The transmission/reception apparatus illustrated in FIG.9 is configured so as to process an I component (In-phase component) and a Q component (Quadrature component) separately. This transmission/reception apparatus is provided with transmission section 100 and reception section 200. Transmission section 100 is provided with dividers 801 to 803 to divide transmission data into the I component and the Q component, I component spreaders 804 to 806 and Q component spreaders 807 to 809 each of which spreads the transmission data, I component adder 810 and Q component adder 811 each of which adds spread data, I component amplitude comparator 812 and Q component amplitude comparator 814 each of which compares a threshold value with an amplitude of data, I component MOD calculator 813 and Q component MOD calculator 815 each of which converts the amplitude based on the results at amplitude comparators 812 and 814, QPSK modulator 816 which modulates the data, amplifier 817 which amplifies the signal, and antenna 818 which transmits the signal.

Reception section 200 is provided with antenna 819 which receives a signal, amplifier 820 which amplifies the signal, quasi-coherent detector 821 which subjects the signal to quasi-coherent detection, I component sampler 822 and Q component sampler 823 each of which samples the data, I component despreaders 824 to 826 and Q component despreaders 827 to 829 each of which subjects the data to despreading processing with a code, I component MOD magnification estimators 830 to 832 and Q component MOD magnification estimators 833 to 835 each of which estimates the number of MOD calculation executed times, and I component even/odd number determiner 836 Q component even/odd number determiner 837 each of which determines whether the number of MOD magnification is an even number or an odd number based on the result of MOD magnification estimation to execute amplitude compensation. This example illustrates the case where 3 codes are multiplexed, and QPSK modulation is used as a modulation method.

Transmission data #0, #1 and #2 are each allocated to an I component side and a Q component side respectively at dividers 801 to 803. The allocated data are respectively spread with different spreading codes in spreaders 804 to 806, and 807 to 809. These codes are assumed to be orthogonalized to each other. The outputs from spreaders 804 to 806 are added at I component adder 811, and outputs from spreaders 807 to 809 are added at Q component adder 811. At this point, a great peak appears depending on a pattern of the transmission data. For example, a signal of maximum ±3 is present in the case where 3 codes are multiplexed. In order to suppress such a signal, I component MOD calculator 813 and Q component MOD calculator 815 each converts an amplitude.

Amplitude comparators 812 and 814 respectively compare an absolute value of an output from each of adders 810 and 811 with a predetermined threshold value. When threshold value is smaller than those values, MOD calculators 813 and 815 execute the amplitude limitation. In addition, the threshold value is set at an amplitude for use in limitation. Further, the threshold value is determined to a small value as possible within a range where received qualities do not deteriorate remarkably.

In the MOD calculation, it is assumed that the denominator is X. When the denominator exceeds X, -2X is substituted for the denominator. When the denominator smaller than X, +2X is substituted for the denominator. FIG.6 illustrates the MOD calculation. After the above processing, when the denominator still exceeds X, -2X is substituted again or the denominator, and when the denominator is smaller than X, +2X is substituted again for the denominator. The threshold value in FIG.9 corresponds to the value of X. According to the above processing, any values which are finite values are converted into values between ±X.

QPSK modulator 816 modulates the resultant to output to amplifier 817. Amplifier 817 amplifies the signal to be transmitted from transmission antenna 818. Thus, the amplitude (peak power) is limited, thereby making it possible to reduce the load of amplifier 817.

A signal received at reception antenna 819 is amplified at amplifier 820, subjected to quasi-coherent detection at quasi-coherent detector 821, and then an I signal is sampled at I component sampler 822, and a Q signal is sampled at Q component sampler 823. The sampled result is separated into 6 signals by being despread at despreaders 824 to 826 and 827 to 829 with the same codes as used in spreading at the transmission side, and then respectively provided to MOD magnification estimators 830 to 832 and 833 to 836 to be subjected to the estimation on information which is lost by MOD.

For example, when it is assumed that the number of used codes is 12, and the threshold value is 4, the amplitude of a chip, of which the real amplitude is 10, is 2 (10-4×2=2). It is further assumed that the value of Y is two times that of the threshold (2X). When the amplitude conversion, which MOD calculators 813 or 815 execute when a value exceeds the threshold value, is executed once, outputs from despreaders 824 to 829 each have an error with an absolute value of Y. Generally, when the number of amplitude conversion times by the MOD calculation is N, with respect to the outputs from despreaders 824 to 829, the error of ±NY is generated. Further, when N is the even number, the value of the error is the even number times that of Y, and when N is an odd number, the value of the error is the odd number times that of Y. Using the aforementioned property, MOD magnification estimators 830 to 835 obtain a value of the integer times the value of Y, which has the maximum likelihood, for each code. With respect to a code with erroneous N determination, ±1 is further added to the obtained magnification, and two magnifications are compared to obtain more likelihood and determine the magnification with the second likelihood.

Even/odd number determiners 836 and 837 estimate whether each of the values of N of all codes is the even number or the odd number based on outputs from MOD magnification estimators 830 to 832 and 833 to 835. In the case where the estimated result is the even number, with respect to the code determined as having the even number, MOD magnification estimators 830 to 834 execute the compensation of the received signal using the determination, and with respect to the code determined as having the odd number, MOD magnification estimators 830 to 835 execute the compensation of the received signal using the determination result with the second likelihood. Thus, I components and Q components of received data #0, #1 and #2 are obtained. On the contrary, in the case where the estimated result is the odd number, with respect to the code determined as having the odd number, MOD magnification estimators 830 to 835 execute the compensation of the received signal using the determination, and with respect to the code determined as having the even number, MOD magnification estimators 604 to 606 execute the compensation of the received signal using the determination result with the second likelihood. Thus, I components and Q components of received data #0, #1 and #2 are obtained.

In the case where a delayed wave is present, it may be possible to execute RAKE combining of the outputs from despreaders 824 to 829. For Q signal and I signal, the received data can be obtained by executing the same processing independently to subject the received signal to compensation based on the independent estimation for each of signals.

In this method, as the number of multiplexed codes is increased, since the ratio of the peak power and the average power is increased, the effects are further increased. It is possible to estimate the distortion caused by the suppression of the peak power at the transmission side with high accuracy to some degree because the outputs from despreaders 824 to 829 have errors having the integer times the value of Y. Further, since estimated results of a plurality of codes can be used, it is possible to estimate the codes when the pattern of transmission data are known as the number of codes is increased. Accordingly, the larger distortion is acceptable as compared to the case where the distortion is suppressed simply by despreading. Therefore, it is possible to lower the threshold value than that in the conventional case, thereby resulting in further advantages in miniaturization, low power consumption and cost reduction.

In this embodiment, I component and Q component MOD calculators 813 and 815 are achieved easily by being provided with a comparator, resulting in almost no excessive load at the transmission side. Further, since an output from each I component and Q component MOD calculators 813 and 815 corresponds to the transmission data pattern completely one by one, it is possible to reproduce completely. In addition, the transmission/reception apparatus according to the fifth embodiment has a reception side with a smaller scale than that in the transmission/reception apparatuses according to the first to fourth embodiments. Further, as compared to the transmission/reception apparatus according to first to sixth embodiments, it is possible to further reduce an amount of calculations at the reception side because the estimation is executed independently for I and Q components, and therefore the complexity required by the estimation is small.

### (Eighth component)

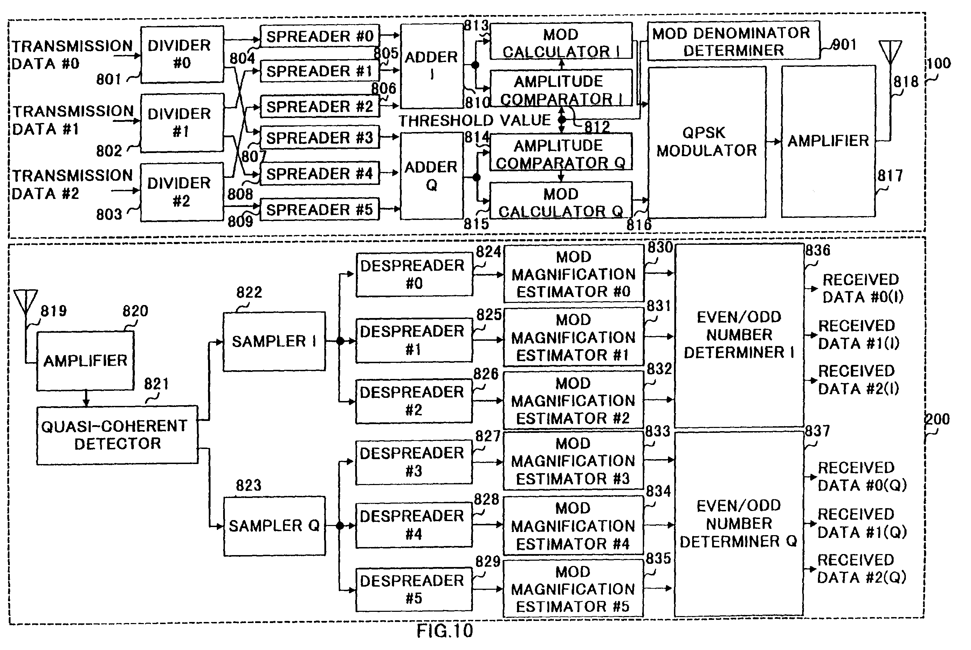

FIG.10 is a block diagram illustrating a configuration of a transmission/reception apparatus according to the eighth embodiment. In FIG.10, the same sections as in FIG.9 have the same symbols as in FIG.9, to omit explanation thereof. The transmission/reception apparatus illustrated in FIG.9, the reception section 100 is provided with MOD denominator determiner 901 which determines a denominator for use in MOD calculation for a threshold value to be inputted to MOD amplitude comparators 812 and 814. This example illustrates the case where 3 codes are multiplexed, and QPSK modulation is used as a modulation method.

Transmission data #0, #1 and #2 are each allocated to an I component side and a Q component side respectively at dividers 801 to 803. The allocated data are respectively spread with different spreading codes in spreaders 804 to 806, and 807 to 809. These codes are assumed to be orthogonalized to each other. The outputs from spreaders 804 to 806 are added at I component adder 811, and outputs from spreaders 807 to 809 are added at Q component adder 811. At this point, a great peak appears depending on a pattern of the transmission data. For example, a signal of maximum ±3 is present in the case where 3 codes are multiplexed. In order to suppress such a signal. I component MOD calculator 813 and Q component MOD calculator 815 each converts an amplitude.

Amplitude comparators 812 and 814 respectively compare an absolute value of an output from each of adders 810 and 811 with a predetermined threshold value. When threshold value is smaller than those values, MOD calculators 813 and 815 execute the amplitude limitation. In addition, the threshold value is set at an amplitude for use in limitation. Further, the threshold value is determined to a small value as possible within a range where received qualities do not deteriorate remarkably.

In the MOD calculation, it is assumed that the denominator is X. When the denominator exceeds X, -2X is substituted for the denominator. When the denominator smaller than X, +2X is substituted for the denominator. FIG.6 illustrates the MOD calculation. After the above processing, when the denominator still exceeds X, -2X is substituted again for the denominator, and when the denominator is smaller than X, +2X is substituted again for the denominator. The threshold value in FIG. 10 corresponds to the value of X. According to the above processing, any values which are finite values are converted into values between ±X. Since the threshold value has a different optimal value depending on the number of used code, MOD denominator determiner 901 determines an optimal threshold value based on information on the number of codes.

QPSK modulator 816 modulates the resultant to output to amplifier 817. Amplifier 817 amplifies the signal to be transmitted from transmission antenna 818. Thus, the amplitude (peak power) is limited, thereby making it possible to reduce the load of amplifier 817.

A signal received at reception antenna 819 is amplified at amplifier 820, subjected to quasi-coherent detection at quasi-coherent detector 821, and then an I signal is sampled at I component sampler 822, and a Q signal is sampled at Q component sampler 823. The sampled result is separated into 6 signals by being despread at despreaders 824 to 826 and 827 to 829 with the same codes as used in spreading at the transmission side, and then respectively provided to MOD magnification estimators 830 to 832 and 833 to 836 to be subjected to the estimation on information which is lost by MOD.

For example, when it is assumed that the number of used codes is 12, and the threshold value is 4, the amplitude of a chip, of which the real amplitude is 10, is 2 (10-4×2=2). It is further assumed that the vale of Y is two times that of the threshold (2X). When the amplitude conversion, which MOD calculators 813 or 815 executes when a value exceeds the threshold value, is executed once, outputs from despreaders 824 to 829 each have an error with an absolute value of Y. Generally, when the number of amplitude conversion times by the MOD calculation is N, with respect to the outputs from despreaders 824 to 829, the error of ±NY is generated. Further, when N is the even number, the value of the error is the even number times that of Y, and when N is an odd number, the value of the error is the odd number times that of Y. Using the aforementioned property, MOD magnification estimators 830 to 835 obtain a value of the integer times the value of Y, which has the maximum likelihood, for each code. With respect to a code with erroneous N determination, ±1 is further added to the obtained magnification, and two magnifications are compared to obtain more likelihood and determine the magnification with the second likelihood.

Even/odd number determiners 836 and 837 estimate whether each of the values of N of all codes is the even number or the odd number based on outputs from MOD magnification estimators 830 to 832 and 833 to 835. In the case where the estimated result is the even number, with respect to the code determined as having the even number, MOD magnification estimators 830 to 834 execute the compensation of the received signal using the determination, and with respect to the code determined as having the odd number, MOD magnification estimators 830 to 835 execute the compensation of the received signal using the determination result with the second likelihood. Thus, I components and Q components of received data #0, #1 and #2 are obtained. On the contrary, in the case where the estimated result is the odd number, with respect to the code determined as having the odd number, MOD magnification estimators 830 to 835 execute the compensation of the received signal using the determination, and with respect to the code determined as having the even number, MOD magnification estimators 604 to 606 execute the compensation of the received signal using the determination result with the second likelihood. Thus, I components and Q components of received data #0, #1 and #2 are obtained.

In the case where a delayed wave is present, it may be possible to execute RAKE combining of the outputs from despreaders 824 to 829. For Q signal and I signal, the received data can be obtained by executing the same processing independently to subject the received signal to compensation based on the independent estimation for each of signals.

In this method, as the number of multiplexed codes is increased, since the ratio of the peak power and the average power is increased, the effects are further increased. It is possible to estimate the distortion caused by the suppression of the peak power at the transmission side with high accuracy to some degree because the outputs from despreaders 824 to 829 have errors having the integer times the value of Y. Further, since estimated results of a plurality of codes can be used, it is possible to estimate the codes when the pattern of transmission data are known as the number of codes is increased. Accordingly, the larger distortion is acceptable as compared to the case where the distortion is suppressed simply by despreading. Therefore, it is possible to lower the threshold value than that in the conventional case, thereby resulting in further advantages in miniaturization, low power consumption and cost reduction.

In addition, by choosing the odd number in the case where the number of codes is the even number, and the even number in the case where the number of codes is the odd number when MOD denominator determiner 901 determines the threshold, the indeterminacy that a plurality of transmission data has the same received patterns is avoided certainly. In other words, since the MOD denominator in the MOD calculation is determined corresponding to the number of multiplexed codes, it is possible to determine an even number or odd number, and thereby not to generate the indeterminacy between different data patterns.

In this embodiment, I component and Q component MOD calculators 813 and 815 are achieved easily by each being provided with a comparator, resulting in almost no excessive load at the transmission side. Further, since an output from each of I component and Q component MOD calculators 813 and 815 corresponds to the transmission data pattern completely one by one, it is possible to reproduce completely. In addition, the transmission/reception apparatus according to the fifth embodiment has a reception side with a smaller scale than that in the transmission/reception apparatuses according to the first to fourth embodiments. Further, as compared to the transmission/reception apparatus according to first to sixth embodiments, it is possible to further reduce an amount of calculations at the reception side because the estimation is executed independently for I and Q components, and therefore the complexity required by the estimation is small. Furthermore, since MOD denominator determiner 901 determines the optimal threshold based on the information on the number of codes, it is possible to perform transmission always with the required minimum peak power, and further to improve the performance as compared to the seventh embodiment.

The transmission and reception apparatus of the present invention is applicable to a base station and a communication terminal apparatus such as a mobile station in a radio communication system. Therefore, it is possible to achieve the load reduction of an amplifier in the radio communication system.

As described above, in the transmission/reception apparatus and transmission/reception method of the present invention, since a transmission side executes the amplitude conversion to reduce the peak power, and the reception side compensates the conversion, it is possible to largely reduce the peak power without lowering communication qualities, thus enabling the apparatus to achieve the miniaturization, low power consumption, and cost reduction.

This application is based on the Japanese Patent Application No.HEI10-105745 filed on March 31, 1998, entire content of which is expressly incorporated by reference herein.

### Industrial Applicability

The present invention is applicable to a base station and a communication terminal apparatus such as a mobile station in a radio communication system.

## Claims

1. A transmission/reception apparatus comprising:
a transmission section provided with conversion means for executing amplitude conversion on a chip which requires transmission power exceeding a predetermined threshold value in a transmission signal with a multi-code; and
a reception section provided with compensation means for compensating the amplitude conversion executed on said chip.

2. The transmission/reception apparatus according to claim 1, wherein the conversion means executes the amplitude conversion by limiting an amplitude with said threshold.

3. The transmission/reception apparatus according to claim 1, wherein the conversion means executes the amplitude conversion by compressing an amplitude with a LOG calculation.

4. The transmission/reception apparatus according to claim 1, wherein the conversion means executes the amplitude conversion by reducing an amplitude with a MOD calculation.

5. The transmission/reception apparatus according to claim 1, the compensation means includes selecting means for selecting a pattern with the maximum likelihood from among all code patterns for the chip subjected to the amplitude conversion.

6. The transmission/reception apparatus according to claim 4, wherein the compensation means includes estimating means for estimating how many times the MOD calculation is executed for each code, and determining means for determining whether the number of MOD calculation executed times is an even number or an odd number.

7. The transmission/reception apparatus according to claim 6, wherein the determining means selects a larger value from a sum of likelihood of codes which are estimated that the number of times is an even number and a sum of likelihood of codes which are estimated that the number of times is an odd number.

8. The transmission/reception apparatus according to claim 6, the compensation means executes the compensation using the number of times of a candidate with a second likelihood with respect to a code having a determination different from the determined odd or even number.

9. The transmission/reception apparatus according to claim 4, further comprising MOD denominator determining means for determining a MOD denominator corresponding to the number of codes.

10. The transmission/reception apparatus according to claim 1, wherein the transmission section and the reception section each executes independent processing on an in-phase component and a quadrature component.

11. A communication terminal apparatus comprising a transmission/reception apparatus comprising:
a transmission section provided with conversion means for executing amplitude conversion on a chip which requires transmission power exceeding a predetermined threshold value in a transmission signal with a multi-code; and
a reception section provided with compensation means for compensating the amplitude conversion executed on said chip.

12. A base station apparatus comprising a transmission/reception apparatus comprising:
a transmission section provided with conversion means for executing amplitude conversion on a chip which requires transmission power exceeding a predetermined threshold value in a transmission signal with a multi-code; and
a reception section provided with compensation means for compensating the amplitude conversion executed on said chip.

13. A transmission/reception method comprising:
the transmission step of executing amplitude conversion on a chip which requires transmission power exceeding a predetermined threshold value in a transmission signal with a multi-code; and
the reception step of compensating the amplitude conversion executed on said chip.

14. The transmission/reception method according to claim 13, wherein in the transmission step, the amplitude conversion is executed by reducing an amplitude with a MOD calculation.

15. The transmission/reception method according to claim 13, wherein in the transmission step, a pattern with the maximum likelihood is selected from among all code patterns for the chip subjected to the amplitude conversion.

16. The transmission/reception method according to claim 14, wherein the reception step includes the estimating step of estimating how many times the MOD calculation is executed for each code, and the determining step determining whether the number of MOD calculation executed times is an even number or an odd number.

17. The transmission/reception method according to claim 16, wherein in the determining step, a larger value is selected from a sum of likelihood of codes which are estimated that the number of times is an even number and a sum of likelihood of codes which are estimated that the number of times is an odd number.

18. The transmission/reception method according to claim 16, wherein in the reception step, the compensation is executed using the number of times of a candidate with a second likelihood with respect to a code having a determination different from the determined odd or even number.

19. The transmission/reception method according to claim 14, wherein in the transmission step, a MOD denominator is determined corresponding to the number of codes.
